Europäisches Patentamt

European Patent Office

Office européen des brevets

(11) Veröffentlichungsnummer: **0 425 476 A2**

(12) **EUROPÄISCHE PATENTANMELDUNG**

(21) Anmeldenummer: **91100477.8**

(22) Anmeldetag: **06.04.90**

(51) Int. Cl.5: **G03B 5/04**

This application was filed on 17.01.1991 as a divisional application to the application mentioned under INID code 60.

(30) Priorität: **14.04.89 DE 3912235**

(43) Veröffentlichungstag der Anmeldung:
**02.05.91 Patentblatt 91/18**

(60) Veröffentlichungsnummer der früheren Anmeldung nach Art. 76 EPÜ: **0 392 385**

(84) Benannte Vertragsstaaten:
**DE FR GB IT SE**

(71) Anmelder: **Firma Carl Zeiss**

**W-7920 Heidenheim (Brenz)(DE)**
(84) **DE FR IT SE**

Anmelder: **CARL-ZEISS-STIFTUNG, HANDELND ALS CARL ZEISS**

**W-7920 Heidenheim an der Brenz(DE)**
(84) **GB**

(72) Erfinder: **Flöther, Werner**
**Galgenbergstrasse 62**
**W-7080 Aalen(DE)**

(54) **Vorrichtung zur Relativverscheibung.**

(57) Die Erfindung betrifft eine Vorrichtung, welche allgemein unter dem Namen PC- oder Shift-Adapter bekannt ist. In dem Adpapter befindet sich mindestens eine Linse zur Vergrößerung des Bildkreisdurchmessers. Dadurch kann man den Einfluß durch die vergrößerte Entfernung zwischen Objektiv und Bildebene in der Kamera kompensieren und/oder eine Vergrößerung des Bildkreisdurchmessers realisieren.

Fig. 2

EP 0 425 476 A2

## VORRICHTUNG ZUR RELATIVVERSCHIEBUNG

Die Erfindung betrifft eine Vorrichtung nach dem Oberbegriff des Anspruchs 1.

Vorrichtungen der obengenannten Art werden PC-Objektive oder Shift-Objektive genannt, wenn das abbildende optische System als Objektiv ausgebildet ist. Sie dienen zum Ausgleich perspektivischer Verzerrungen wie stürzende Linien. Es sind bereits derartige Objektive bekannt, die sich an der Kamera vertikal, horizontal und diagonal verschieben lassen und welche zur Korrektion der Perspektive bei Aufnahmen hauptsächlich in der Architektur- und Industriephotographie verwendet werden.

Aus der US-PS 29 31 268 ist eine Vorrichtung bekannt, bei welcher zwei Platten in jeweils einer Schwalbenschwanzführung relativ zur Filmebene mit Spindeln wahlweise in x- oder y-Richtung verschoben werden können. Diese Art der Plattenbewegung benötigt einen hohen Platzbedarf und ist sehr teuer, da viele Teile mit sehr geringen Toleranzen zueinander benötigt werden. Dies trifft in gleicher Weise auf ein Objektiv mit einer Kupplungsvorrichtung aus der DE-PS 28 01 994 zu.

Aus der DE-PS 26 13 159 ist ein photographisches Objektiv bekannt, welches die Schwalbenschwanzführung vermeidet.

Bei diesem Objektiv sind zur Bewegung in x-y-Richtung Drehringe zwischen einer Einstellfassung des Objektivs und einem Drehwinkelübertragungssystem vorgesehen, welche übereinandergeschoben montiert sind. Der mittlere Ring ist ortsfest und zentrisch zur Kamera angeordnet und die radiale und axiale Führung wird von zwei weiteren Ringen gebildet, welche bei ihrer Drehung über Steuerkurven und Verbindungsteile die Bewegung auf die Einstellfassung des Objektivs übertragen. Der hohe Platzbedarf und das Problem mit den sehr geringen Toleranzen liefern auch hier keine optimale Lösung. Entsprechendes gilt für den sogenannten Shift-Adapter aus der DE-PS 34 36 886, der zwischen Objektiv und Kamera angeordnet ist.

Aus der US-PS 37 13 725 ist ein PC-Objektiv bekannt, bei welchem die Verstellung senkrecht zur optischen Achse durch zwei ineinandergesteckte exzentrische Ringe erfolgt. Der Platzbedarf ist geringer als bei den anderen Lösungen, doch wurde das Toleranzproblem lediglich von vielen linienhaften Flächen auf runde Flächen verlagert, ohne daß eine wesentliche Verringerung der exakt zu bearbeitenden Flächen erfolgt. Außerdem kann man mit diesem PC-Objektiv nur einen relativ kleinen Verstellbereich realisieren.

Der vorliegenden Erfindung liegt die Aufgabe zugrunde, eine Vorrichtung zur Korrektur von perspektivischen Verzeichnungen zu erhalten, welche die Anbringung von Objetiven mit normalem Bildkreisdurchmesser an eine Kamera ermöglicht, ohne daß die ausgeleuchtete Fläche des Bildträgers bei der Korrektur sich verkleinert.

Diese Aufgabe wird erfindungsgemäß durch eine Ausbildung der Vorrichtung nach den kennzeichnenden Merkmalen des Anspruchs 1 gelöst.

Unter einem Bildträger gemäß der Erfindung sind fotographische Schichten, lichtempfindliche Linien oder Flächensensoren usw. zu verstehen.

Damit vorhandene Kameragehäuse und Objektive weiterhin benutzt werden können, wird die Vorrichtung nach der Erfindung als Adapter ausgestaltet. Durch Einsetzen mindestens einer Linse in den Adapter kann man den Einfluß durch die vergrößerte Entfernung zwischen Objektiv und Bildebene im Gerät kompensieren und/oder eine notwendige Vergrößerung des Bildkreisdurchmessersrealisieren.

Die Erfindung wird nachstehend in beispielhafter Weise anhand der Figuren 1-4 der Zeichnungen näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigt

Figur 1 eine Seitenansicht eines an eine Kamera angesetzten Shift-Adapters;

Figur 2 die Vorrichtung nach Figur 1 in Frontansicht;

Figur 3 eine schematische Darstellung der Bewegung eines Shift-Adapters, und

Figur 4 eine Detaildarstellung zur Erläuterung des Einflusses der Schwenkbewegung des Shift-Adapters.

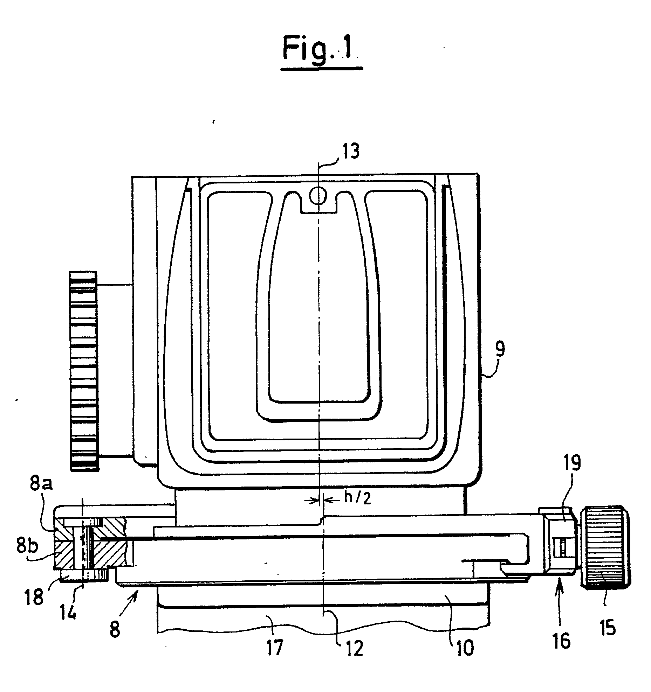

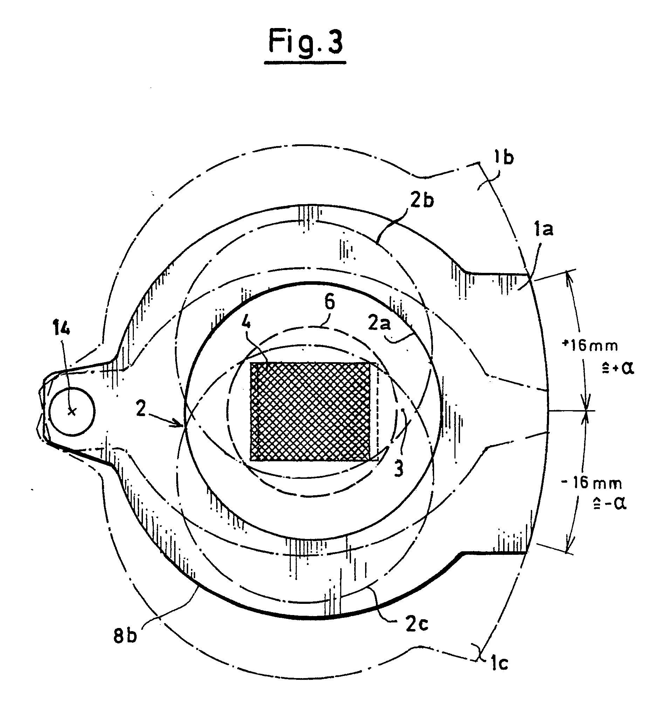

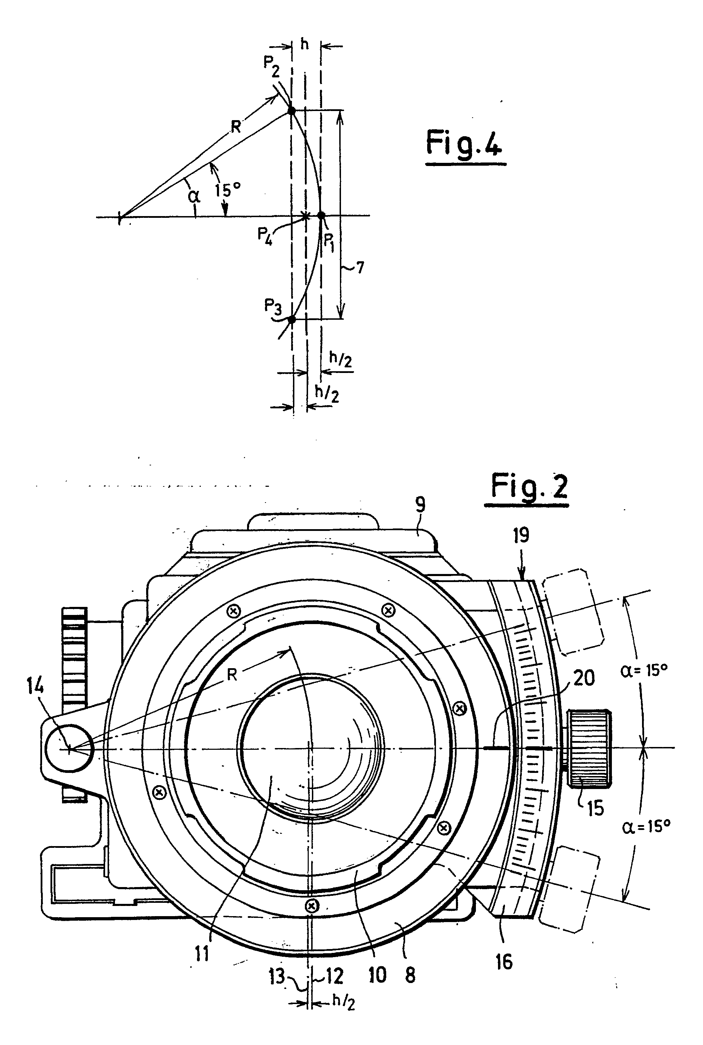

In den Figuren 1 und 2 ist mit (9) ein Kamera-Gehäuse bezeichnet, an dem ein Shift-Adapter (8) lösbar mit einer Feststellvorrichtung z.B. einem Verschluß angebracht ist. Bei dem Kamera-Gehäuse (9) handelt es sich um ein konventionelles Gehäuse, an welchem normalerweise ein Objektiv lösbar befestigt wird. Auf der dem Kamera-Gehäuse (9) gegenüberliegenden Seite des Shift-Adapters (8) hat dieser eine weitere Feststellvorrichtung (10), z.B. einen Bajonett-Anschluß, an welcher ein Objektiv (17) befestigt ist.

Damit Objektive (17) an dem Shift-Adapter (8) verwendet werden können, muß sichergestellt werden, daß der Bildkreisdurchmesser in der Filmebene im Kamera-Gehäuse (9) genügend groß ist. Dies wird im Zusammenhang mit der Figur 3 näher erläutert werden. Damit das Objektiv (17) in jeder Stellung des Shift-Adapters (8) das Bildformat im Kamera-Gehäuse (9) in seinem Bildkreis einschließt, ist in der Strahlendurchtrittsöffnung des Shift-Adapters (8) eine Linse (11) angeordnet, die den Bildkreisdurchmesser des Objektivs (17) im erforderlichen Maße vergrößert.

Konstruktiv besteht der Shift-Adapter (8) im wesentlichen aus zwei plattenförmigen Körpern (8a,8b). Einer dieser Körper (8a) ist starr, aber lösbar mit dem Kamera-Gehäuse (9) verbunden, in dem anderen Körper (8b) ist das Objektiv (17) eingesetzt. Die beiden plattenförmigen Körper (8a,b) haben eine feste, drehbare Verbindung in einem Punkt (14) durch einen lösbaren, selbstsichernden Bolzen (18). Der Befestigungspunkt (14) liegt seitlich der beiden plattenförmigen Körper (8a,b) und erlaubt, daß diese Körper relativ zueinander um diesen Punkt (14) bewegt werden können. Die Lage des Schwenkpunktes (14) am seitlichen Rand der beiden Körper (8a,b) ist wesentlich für die Funktionsweise des Shift-Adapters (8). Nur dadurch, daß dieser Punkt (14) eine extreme seitliche Lage hat, kann ein noch akzeptabler Mittenversatz bei einem sehr großen Hub erreicht werden. Die seitliche Lage des Schwenkpunkts (14) wirkt sich günstig auf die Fertigungstoleranzen aus, da diese bei einer Führung mit großem Abstand zur optischen Achse (12) relativ groß sein dürfen.

Die beschriebene konstruktive Ausbildung erlaubt die Realisierung des Adapters (8) mit einer minimalen Anzahl von Teilen, woraus ein niedriger Platzbedarf resultiert.

Auf der dem Schwenkpunkt (14) gegenüberliegenden Seite greift einer der Körper (8a), hier der am Kamera-Gehäuse (9) befestigte, um den anderen plattenförmigen Körper (8b) und sorgt so für eine Führung dieses Körpers (8b), an welchem das Objektiv (17) befestigt ist. Diese zusätzliche Führung erhöht die Stabilität des Adapters (8) und sorgt für eine kräftemäßige Entlastung des Bolzens (18), insbesondere gegen durch Stöße verursachte Kräfte. Aus diesem Grund ist die Führung so ausgelegt, daß sich der vordere plattenförmige Körper (8b) leichtgängig mit nur geringem Spiel in der Führung bewegen kann.

Damit sich das Objektiv (17) nicht von selbst relativ zum Kamera-Gehäuse (9) verstellen kann, ist auf der dem Schwenkpunkt (14) gegenüberliegenden Seite eine lösbare Feststellvorrichtung (15) angebracht. Diese Feststellvorrichtung (15) ist fest mit dem vorderen plattenförmigen Körper (8b) verbunden und greift durch eine seitliche Öffnung der Führung (19). Diese seitliche Öffnung ist an den Enden der Führung (19) geschlossen und sorgt so für eine Begrenzung der Verstellmöglichkeit der beiden plattenförmigen Körper (8a,b).

Die Feststellvorrichtung (15) ist so konstruiert, daß die Feststellung durch ein leichtes Herausziehen der Feststellschraube gelöst werden kann. In diesem Zustand können die beiden plattenförmigen Körper (8a,b) leicht gegeneinander verschwenkt werden. Dabei dient der Teil der Feststellvorrichtung (15), welcher fest mit dem vorderen plattenförmigen Körper (8b) verbunden ist, als Verstellhebel. Wird die Feststellvorrichtung (15) losgelassen, so sorgt sie für eine Fixierung der beiden plattenförmigen Körper (8a,b) zueinander. Damit ist die Feststellvorrichtung (15) im gezogenen Zustand gleichzeitig eine Einstellvorrichtung für die Lage der beiden Körper (8a,b) zueinander. Damit die Stellung der beiden plattenförmigen Körper (8a,b) zueinander abgelesen werden kann um diese Stellung für die gemachten Aufnahmen zu dokumentieren, ist auf der Führung (19) eine Skala (16) angebracht. Korrespondierend zu dieser Skala (16) mit einer Stricheinteilung zum Ablesen des eingestellten Hubs ist auf dem vorderen plattenförmigen Körper (8b) ein Indexstrich (20) angebracht.

Die optische Achse (12) des Adapters (8) und damit des Objektivs (17) ist gegenüber der optischen Achse (13) des Kamera-Gehäuses (9) leicht versetzt. Diese Versetzung entspricht dem halben Mittenversatz (h/2), wie anhand der Figuren 3 und 4 näher erläutert wird. In der schematischen Darstellung der Figur 3 ist der das Objektiv (17) tragende Körper (8b) des Shift-Adapters (8) in drei verschiedenen Stellungen (1a-c) gezeigt. Seine, zur Aufnahme des Objektivs (17) dienende kreisförmige Öffnung (2) überdeckt sich in den mit (1a-1c) bezeichneten Schwenkpositionen in einem Bereich (3). In diesem Bereich (3) liegt das Bildformat (4) im Kamera-Gehäuse (9).

Die notwendige Größe der Öffnung (2) ergibt sich als eine Funktion der Größe des Bildformats (4), des Abstandes des Mittelpunktes dieser Öffnung vom Schwenkpunkt (14), und der Größe des Schwenkwinkels $\alpha$ bei gegebenen optischen Eigenschaften eines Objektivs (17). Der Schwenkpunkt (14) liegt möglichst weit entfernt vom Mittelpunkt der Öffnung (2). Damit bei jeder Stellung der Strahlendurchtrittsöffnung (2) eine Belichtung des vollständigen Bildformats (4) möglich ist, darf dessen Fläche niemals aus der Fläche der zentralen Öffnung (2) des Körpers (8b) hinauswandern. Damit ergibt sich bei gegebener Größe des Bildformats (4) der Schwenkwinkel $\alpha$, der die maximale Auslenkung des Körpers (8b) aus seiner Normallage (1a) in positiver und negativer Richtung angibt. Damit die Fläche des Bilformats (4) immer in der Fläche der zentralen Öffnung (2) liegt, muß deren Durchmesser bei einem Shift-Adapter (8) größer sein als bei einem Normalobjektiv. Der Bildkreisdurchmesser (6) eines Objektivs (17) ist zum Größenvergleich in der Figur 3 eingezeichnet. Zur Vergrößerung des Bildkreisdurchmessers (6) eines Normalobjektivs dient die im Shift-Adapter (8) vorgesehene Linse (11) (siehe Figur 2).

Da der Mittelpunkt der Öffnung (2) sich auf einer Sehne eines Kreises bewegt, dessen Mittelpunkt der Schwenkpunkt (14) darstellt, muß das Bildformat (4) um die halbe Höhe des dabei entstehenden Kreisabschnittes in Richtung Schwenkpunkt (14) versetzt angeordnet werden. Dies soll in Figur 4 nun genauer erläutert werden.

Der Mittelpunkt der Öffnung (2) in Normallage ist mit P1 gekennzeichnet. Wird der Körper (8b) um den maximal möglichen Wert des Schwenkwinkels, hier $\alpha = \pm 15°$, geschwenkt, so ergeben sich in den Maximallagen der Öffnung (2) Stellungen der Mittelpunkte, welche mit P2 und P3 gekennzeichnet sind. Die Mittelpunkte der Öffnung (2) (P1,P2,P3) liegen alle auf Sehnen eines Schwenkkreises, welcher seinen Mittelpunkt im Schwenkpunkt (14) hat. Dieser Schwenkkreis hat einen Kreisdurchmesser R. Durch die Lage der Mittelpunkte (P2,P3) bei maximaler Auslenkung des Körpers (8b) ist die Länge des Kreisbogens und damit die Länge der Kreissehne (7) festgelegt, wobei letztere bei Shift-Objektiven (8) auch als Hub bezeichnet wird. Außerdem wird dadurch die Höhe des Kreisabschnittes festgelegt, welche auch als Mittenversatz h bezeichnet wird. Um einen möglichst geringen Mittenversatz bei jeder Stellung des Shift-Adapters (8) zu erhalten, wird der Mittelpunkt der Öffnung in Grundstellung von P1 nach P4 verlegt. Dadurch erreicht man, daß der Mittenversatz nur noch $\pm 1/2$ h sein kann.

Als optische Geräte zur Verwendung mit einem Shift-Adapter kommen beispielhaft in Frage: Filmkameras, Fotoapparate, Projektoren usw.. Dabei können weitere Verstellmöglichkeiten eines Objektivs relativ zum Filmformat (z.B. Vergrößerungen der Entfernungen entlang der optischen Achse, Rotationen um die optische Achse, Kippbewegungen usw.) hinzukommen.

**Ansprüche**

1. Vorrichtung zur Relativverschiebung zwischen den optischen Achsen eines abbildenden optischen Systems und eines, mit einer Strahlendurchtrittsöffnung versehenen Gerätes, das innerhalb dieser Öffnung einen in der Bildebene des optischen Systems angeordneten Bildträger enthält zum Zwecke der Korrektur von perspektivischen Verzeichnungen, dadurch gekennzeichnet, daß die Vorrichtung als Adapter (8) ausgebildet ist, welcher zwischen dem Gerät (9) und dem abbildenden System (17) angeordnet ist und daß in der Strahlendurchtrittsöffnung (2) mindestens eine Linse (11) zur Vergrößerung des Bildkreisdurchmessers angebracht ist.

# Fig.1

# Fig. 3

Fig.4

Fig.2